# EUROPÄISCHE PATENTSCHRIFT

(11) **EP 1 332 921 B1**
(45) Veröffentlichungstag und Bekanntmachung des Hinweises auf die Patenterteilung: **22.03.2006**
(21) Anmeldenummer: 02028831.2
(22) Anmeldetag: 21.12.2002
(51) Int. Cl.: B60R 11/02, H04R 5/02

(54) **Befestigungsanordnung eines Lautsprechers an einem Verkleidungsteil eines Fahrzeuges**
Speaker mounting assembly for a vehicle panel
Système de fixation d'un haut-parleur à un panneau de véhicule

(30) Priorität: 05.02.2002 DE 10204604
(43) Veröffentlichungstag der Anmeldung: 06.08.2003
(73) Patentinhaber: Dr.Ing. h.c.F. Porsche Aktiengesellschaft, 70435 Stuttgart (DE)
(72) Erfinder: Benkler, Olaf, 75242 Neuhausen/Hamberg (DE)

(56) Entgegenhaltungen:
- EP-A- 0 769 420
- WO-A-00/69687
- US-A- 4 993 510
- PATENT ABSTRACTS OF JAPAN vol. 2002, no. 04, 4. August 2002 (2002-08-04) -& JP 2001 347896 A (KASAI KOGYO CO LTD), 18. Dezember 2001 (2001-12-18)
- PATENT ABSTRACTS OF JAPAN vol. 1996, no. 02, 29. Februar 1996 (1996-02-29) -& JP 07 251686 A (KASAI KOGYO CO LTD), 3. Oktober 1995 (1995-10-03)

## Beschreibung

Die Erfindung betrifft eine Befestigungsanordnung für einen durch eine Lautsprecherblende abgedeckten Lautsprecher an einem Verkleidungsteil eines Fahrzeuges gemäß dem Oberbegriff des Patentanspruches 1.

Aus der US-PS 4,993,510 geht eine Lautsprecherbefestigung hervor, wobei der Lautsprecher unmittelbar an der Innenseite der Lautsprecherblende befestigt ist und die Lautsprecherblende mittels eines Halteteiles gegen das Verkleidungsteil gespannt ist. Dieser Anordnung haftet der Nachteil an, daß die Lautsprecherblende aufgrund der Bautiefe des Lautsprechers relativ weit in den Fahrgastraum hineinragt. Darüber hinaus müssen beim Austausch eines defekten Lautsprechers sowohl die Lautsprecherblende als auch das Halteteil vom Verkleidungsteil demontiert werden.

Die JP-A-2001347896 zeigt eine Befestigungsanordnung für einen durch eine Lautsprecherblende abgedeckten Lautsprecher an einem Verkleidungsteil eines Fahrzeuges, wobei das Verkleidungsteil benachbart des Lautsprechers eine Aussparung aufweist, die Lautsprecherblende und ein Halteteil durch Befestigungsschrauben miteinander verbunden sind und sich örtlich an gegenüberliegenden Seiten des Verkleidungsteiles abstützen, wobei an der Lautsprecherblende mehrere mit Abstand zueinander angeordnete, von dieser abragende Dome vorgesehen sind, die durch am Verkleidungsteil ausgebildete Durchbrüche hindurchragen, wobei auf das das Verkleidungsteil überragende freie Ende jedes Domes das Halteteil aufgesetzt und daran mittels einer eingedrehten Befestigungsschraube in Lage gehalten ist.

Aufgabe der Erfindung ist es, eine Befestigungsanordnung für einen Lautsprecher an einem Verkleidungsteil eines Fahrzeuges so weiterzubilden, daß die Lautsprecherblende nur minimal in den Fahrgastraum hineinragt und daß der Austausch eines defekten Lautsprechers möglichst einfach ohne Demontage von Lautsprecherblende und Halteteil durchführbar ist.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß durch die flachbauende Lautsprecherblende mit angeformten Domen und das einen Lautsprecher aufnehmende Halteteil eine Lautsprecherbefestigung geschaffen wird, die nur unwesentlich in den Fahrgastraum hineinragt und mittels der ein einfacher unproblematischer Lautsprecheraustausch ohne Demontage von Lautsprecherblende und Halteteil ermöglicht wird. Die Lautsprecherblende und das Halteteil stellen einfach herzustellende kostengünstige Bauteile dar. Die komplette Lautsprecheranordnung ist einfach montierbar. Zur Demontage des Lautsprechers müssen lediglich zwei Befestigungsschrauben entfernt werden, wogegen die Lautsprecherblende und das Halteteil am Verkleidungsteil verbleiben.

Ein Ausführungsbeispiel der Erfindung ist in der Zeichnung dargestellt und wird im folgenden näher beschrieben.
Es zeigt:
- Fig. 1: in Explosionsdarstellung das Verkleidungsteil von vorne, die Lautsprecherblende, das Halteteil und den Lautsprecher,

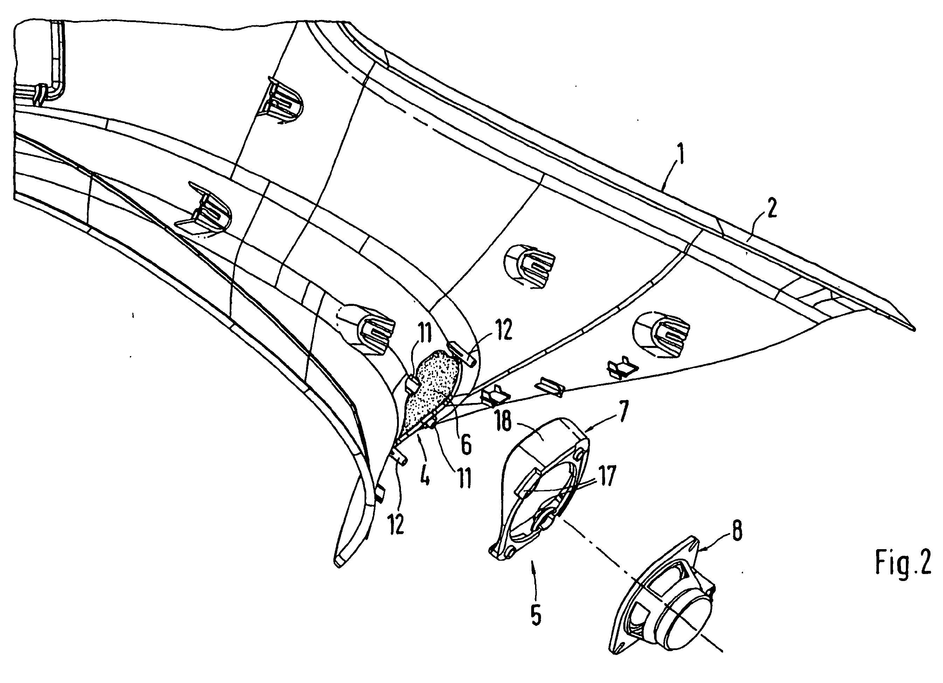

- Fig. 2: in weiterer Explosionsdarstellung das Verkleidungsteil von hinten mit aufgesetzter Lautsprecherblende, das Halteteil und den Lautsprecher,
- Fig. 3: in weiterer Explosionsdarstellung das Verkleidungsteil von hinten mit montierter Lautsprecherblende aufgesetztem Halteteil und noch nicht montiertem Lautsprecher,
- Fig. 4: einen Schnitt nach der Linie IV-IV der Fig. 3, wobei die Befestigung zwischen Lautsprecherblende und Halteteil dargestellt ist,
- Fig. 5: einen Schnitt nach der Linie V-V der Fig. 3, der die Befestigung des Lautsprechers am Halteteil zeigt.

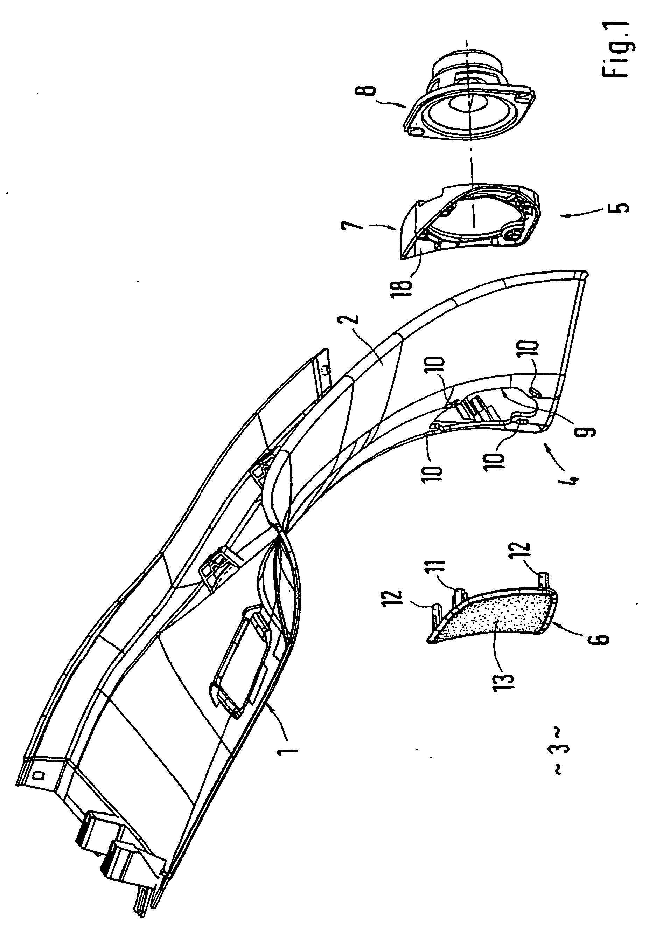

In Fig. 1 ist ein im Fahrgastraum 3 eines nicht näher dargestellten Fahrzeuges angeordnetes Verkleidungsteil 1 gezeigt, das im Ausführungsbeispiel durch eine aufrechte Säulenverkleidung 2 gebildet wird. Das Verkleidungsteil 1 ist beispielsweise als Spritzgußteil aus einem geeigneten Kunststoff gefertigt und weist auf der dem Fahrgastraum 3 zugekehrten Seite eine Narbung oder einen dekorativen Bezug auf. Die Befestigung des Verkleidungsteiles 1 am nicht näher dargestellten angrenzenden Aufbau des Fahrzeuges erfolgt in herkömmlicher Weise durch Klipsen, Schrauben oder dgl..

In einem untenliegenden Bereich 4 des Verkleidungsteiles 1 ist eine Lautsprecheranordnung 5 vorgesehen, die sich aus einer Lautsprecherblende 6, einem Halteteil 7 und einem Lautsprecher 8 zusammensetzt. Am Verkleidungsteil 1 ist dem Lautsprecher 8 vorgelagert eine zentrale Aussparung 9 ausgebildet, die als Schalldurchtrittsöffnung dient.

Zur Befestigung der Lautsprecheranordnung 5 sind am Verkleidungsteil 1 und zwar außerhalb sowie benachbart der Aussparung 9 mehrere Durchbrüche 10 vorgesehen, durch die angeformte abragende Dome 11, 12 der Lautsprecherblende 6 hindurchgeführt sind, wobei die Dome 11, 12 das Verkleidungsteil 1 nach hinten hin bereichsweise überragen. Die die Aussparung 9 am Verkleidungsteil 1 allseitig überragende Lautsprecherblende 6 wird von vorne auf die dem Fahrgastraum 3 zugekehrte Seite des Verkleidungsteiles 1 aufgesetzt und weist zumindest bereichsweise eine gitterförmige Struktur mit einem äußeren umlaufenden geschlossenen Rahmen auf (Fig. 1). Zum Fahrgastraum 3 hin ist die Lautsprecherblende 6 flachbauend ausgebildet. Die angespritzten Dome 11, 12 sind etwa rechtwinkelig zu der vom Fahrgastraum 3 aus sichtbaren Fläche 13 der Lautsprecherblende 6 ausgerichtet und als Hohlzylinder 20 ausgebildet, wobei die Hohlzylinder 20 zum Fahrgastraum 3 hin geschlossen sind.

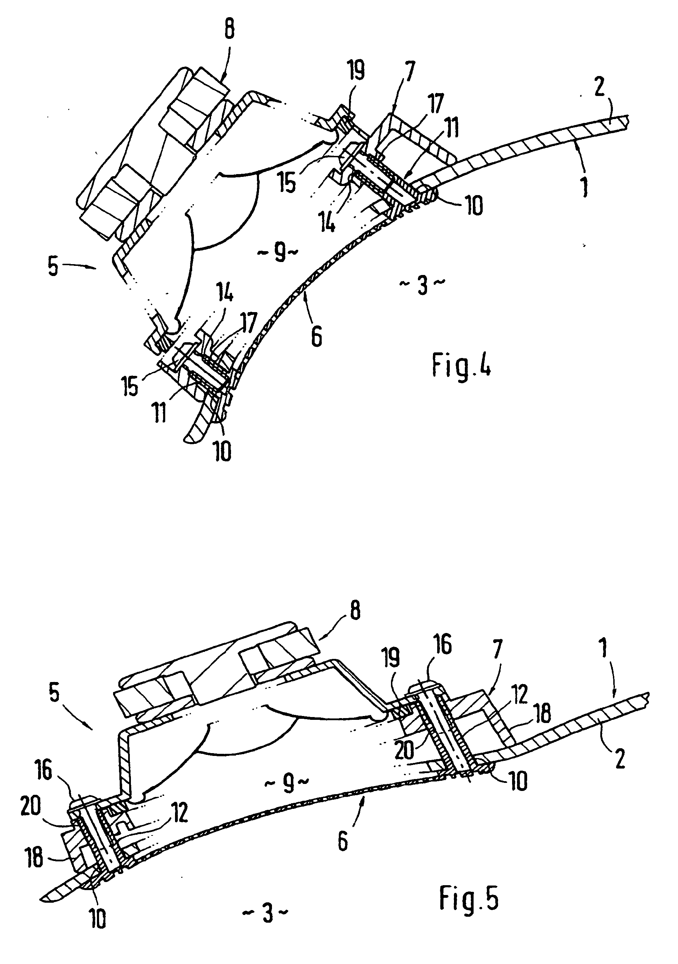

Von der der Lautsprecherblende 6 gegenüberliegenden Seite des Verkleidungsteiles 1 wird auf die freien Enden 14 der Dome 11 das Halteteil 7 aufgesetzt und mittels Befestigungsschrauben 15 an den Domen 11 festgelegt (Fig. 4). Darüber hinaus ist der Lautsprecher 8 auf das ringförmig ausgebildete Halteteil 7 aufgesetzt und an den Domen 12 der Lautsprecherblende 6 mittels Befestigungsschrauben 16 in Lage gehalten (Fig. 5).

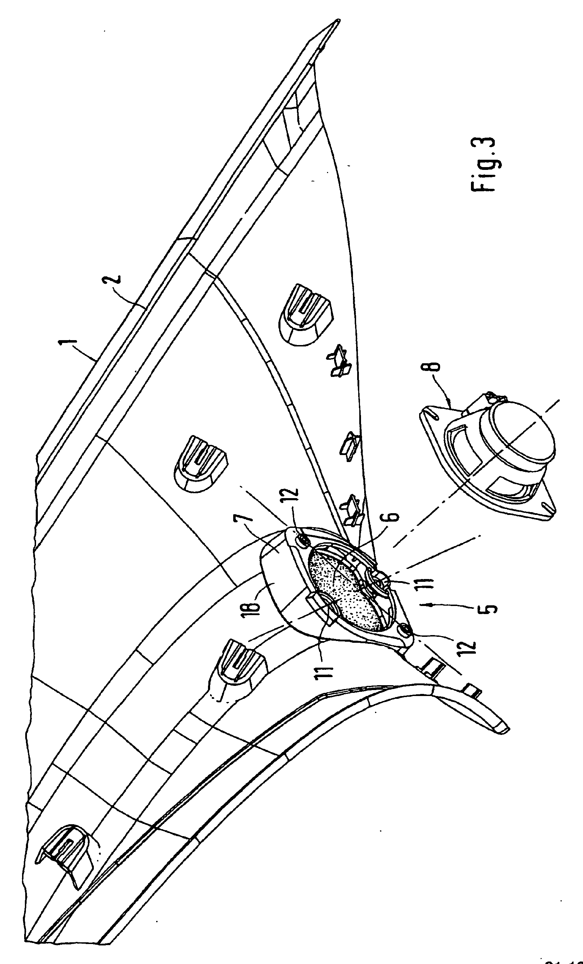

Vorzugsweise sind an der Lautsprecherblende 6 zumindest zwei Dome 11 zur Verbindung mit dem Halteteil 7 und weitere zumindest zwei Dome 12 zur Befestigung des Lautsprechers 8 vorgesehen. Die zwei jeweils einander zugeordneten Dome 11, 12 sind diagonal gegenüberliegend an der Lautsprecherblende 6 ausgebildet (s. Fig. 3). Es können an der Lautsprecherblende 6 jedoch auch mehr oder weniger als zwei Dome zur Verbindung mit dem Halteteil 7 bzw. zur Lautsprecherbefestigung vorgesehen sein.

Zur lagerichtigen Positionierung des Halteteils 7 weist dieses örtlich topfförmig ausgebildete Aufnahmen 17 auf, die die freien Enden 14 der zugeordneten Dome 11 abschnittsweise umgreifen (Fig. 4). Ferner stützt sich das ringförmig ausgebildete Halteteil 7 mit einem umlaufenden äußeren Steg 18 an der Rückseite des Verkleidungsteiles 1 ab und zwar außerhalb der Aussparung 9. Der Steg 18 weist entlang seiner Längserstreckung einen unterschiedlichen Höhenverlauf auf.

Der Lautsprecher 8 ist unter Zwischenschaltung eines umlaufenden Dichtkörpers 19 auf die äußere Stirnseite des Halteteiles 7 aufgesetzt und wird durch die Befestigungsschrauben 16 in Lage gehalten. Die Befestigungsschrauben 15, 16 für den Lautsprecher 8 bzw. das Halteteil 7 werden jeweils von der dem Fahrgastraum 3 abgekehrten Seite des Verkleidungsteiles 1 montiert und zwar werden die Befestigungsschrauben 15, 16 in die Hohlzylinder 20 der Dome 11, 12 eingedreht. Die Hohlzylinder 20 der Dome 11 bzw. 12 können entweder ein Innengewinde aufweisen oder es werden gewindebildende Befestigungsschrauben 15, 16 verwendet, die in gewindelos ausgebildete Hohlzylinder 20 eingedreht werden.

## Patentansprüche

1. Befestigungsanordnung für einen durch eine Lautsprecherblende (6) abgedeckten Lautsprecher (8) an einem Verkleidungsteil (1) eines Fahrzeuges, wobei das Verkleidungsteil (1) benachbart des Lautsprechers (8) eine Aussparung (9) aufweist, die Lautsprecherblende (6) und ein Halteteil (7) durch Befestigungsschrauben (15) miteinander verbunden sind und sich örtlich an gegenüberliegenden Seiten des Verkleidungsteiles (1) abstützen und an der Lautsprecherblende (6) mehrere mit Abstand zueinander angeordnete, von dieser abragende Dome (11, 12) vorgesehen sind, die durch am Verkleidungsteil (1) ausgebildete Durchbrüche (10) hindurchragen, wobei auf das das Verkleidungsteil (1) überragende freie Ende (14) jedes Domes (11) das Halteteil (7) aufgesetzt und mittels Befestigungsschrauben (15) an den Domen (11) festgelegt ist, **dadurch gekennzeichnet, dass** darüber hinaus der Lautsprecher (8) auf das ringförmig ausgebildete Halteteil (7) aufgesetzt und an den Domen (12) der Lautsprecherblende (6) mittels Befestigungsschrauben (16) in Lage gehalten ist.

2. Befestigungsanordnung nach Anspruch 1, **dadurch gekennzeichnet, dass** an der flachbauenden Lautsprecherblende (6) zumindest zwei Dome (11) zur Verbindung mit dem Halteteil (7) und zumindest weitere zwei Dome (12) zur Befestigung des Lautsprechers (8) ausgebildet sind.

3. Befestigungsanordnung nach den Ansprüchen 1 und 2, **dadurch gekennzeichnet, dass** die zwei jeweils einander zugeordneten Dome (11 bzw. 12) diagonal gegenüberliegend an der Lautsprecherblende (6) angeordnet sind.

4. Befestigungsanordnung nach den Ansprüchen 1 bis 3, **dadurch gekennzeichnet, dass** die angeformten Dome (11, 12) einstückig mit der Lautsprecherblende (6) ausgebildet sind.

5. Befestigungsanordnung nach einem der vorangegangenen Ansprüche, **dadurch gekennzeichnet, dass** die Lautsprecherblende (6) durch ein Spritzgußteil aus einem geeignetem Kunststoff gebildet wird.

6. Befestigungsanordnung nach Anspruch 1, **dadurch gekennzeichnet, dass** die Durchbrüche (10) am Verkleidungsteil (1) außerhalb und benachbart der zentralen Aussparung (9) vorgesehen sind.

7. Befestigungsanordnung nach Anspruch 1, **dadurch gekennzeichnet, dass** zur lagerichtigen Positionierung des Halteteils (7) an diesem örtlich topfförmige Aufnahmen (17) ausgebildet sind, die die freien Enden (14) der zugeordneten Dome (11) der Lautsprecherblende (6) abschnittsweise umgreifen.

8. Befestigungsanordnung nach einem der vorangegangenen Ansprüche, **dadurch gekennzeichnet, dass** das Halteteil (7) an zumindest zwei gegenüberliegend angeordneten Domen (11) der Lautsprecherblende (6) aufliegt und sich mit einem umlaufenden randseitigen Steg (18) an der Innenseite des Verkleidungsteiles (1) abstützt.

9. Befestigungsvorrichtung nach einem der vorangegangenen Ansprüche, **dadurch gekennzeichnet, dass** der Lautsprecher (8) im Bereich seiner Befestigung an der Stirnseite der freien Enden der Dome (12) auflegt und mittels der Befestigungsschrauben (16) gegen die Dome (12) bzw. das Halteteil (7) gespannt wird, wobei zwischen Lautsprecher (8) und Halteteil (7) ein umlaufender Dichtkörper (19) zwischengeschaltet ist.

10. Befestigungsanordnung nach einem der vorangegangenen Ansprüche, **dadurch gekennzeichnet, dass** die angespritzten Dome (11, 12) als Hohlzylinder (20) ausgebildet sind, die zum Fahrgastraum (3) hin geschlossen sind, wobei in die Hohlzylinder (20) von der Rückseite her die Befestigungsschrauben (15, 16) eingedreht sind.

## Claims

1. A fastening arrangement for a speaker (8) covered by a speaker grill (6) on a trim panel (1) of a vehicle, wherein the trim panel (1) has an opening (9) adjacent to the speaker (8), the speaker grill (6) and a retaining part (7) are connected to each other by fastening screws (15) and are supported locally on opposite sides of the trim panel (1), and a plurality of stubs (11, 12), which are arranged at a distance from one another and project from the speaker grill (6) and which project through apertures (10) formed in the trim panel (1), are provided on the speaker grill (6), wherein the retaining part (7) is positioned on the free end (14) of each stub (11) projecting beyond the trim panel (1) and is fixed on the stubs (11) by means of fastening screws (15), **characterized in that** the speaker (8) is additionally mounted on the retaining part (7) constructed in the form of a ring and is held in position on the stubs (12) of the speaker grill (6) by means of fastening screws (16).

2. A fastening arrangement according to Claim 1, **characterized in that** at least two stubs (11) for connexion to the retaining part (7) and at least a further two stubs (12) for fastening the speaker (8) are formed on the speaker grill (6) designed in a flat manner.

3. A fastening arrangement according to Claims 1 and 2, **characterized in that** the two stubs (11 and 12 respectively) associated with each other in each case are arranged diagonally opposite each other on the speaker grill (6).

4. A fastening arrangement according to Claims 1 to 3, **characterized in that** the integrally formed stubs (11, 12) are constructed in one piece with the speaker grill (6).

5. A fastening arrangement according to any one of the preceding Claims, **characterized in that** the speaker grill (6) is formed by an injection-moulded part of a suitable plastics material.

6. A fastening arrangement according to Claim 1, **characterized in that** the apertures (10) on the trim panel (1) are provided outside and adjacent to the central opening (9).

7. A fastening arrangement according to Claim 1, **characterized in that** cup-shaped receiving means (17), which engage in part around the free ends (14) of the associated stubs (11) of the speaker grill (6), are formed locally on the retaining part (7) in order to position the said retaining part (7) correctly.

8. A fastening arrangement according to any one of the preceding Claims, **characterized in that** the retaining part (7) rests on at least two stubs (11) of the speaker grill (6) situated opposite each other and is supported on the inside of the trim panel (1) by a continuous web (18) on the edge.

9. A fastening arrangement according to any one of the preceding Claims, **characterized in that** in the region of its fastening the speaker (8) rests on the end face of the free ends of the stubs (12) and is clamped against the stubs (12) and the retaining part (7) respectively by means of the fastening screws (16), wherein a continuous sealing body (19) is interposed between the speaker (8) and the retaining part (7).

10. A fastening arrangement according to any one of the preceding Claims, **characterized in that** the injection-moulded stubs (11, 12) are constructed in the form of hollow cylinders (20) which are closed towards the passenger compartment (3), wherein the fastening screws (15, 16) are screwed into the hollow cylinders (20) from the rear.

## Revendications

1. Dispositif de fixation pour un haut-parleur (8), masqué par un couvercle (6), sur un panneau de doublage (1) dans un véhicule automobile, dans lequel le panneau de doublage (1) est muni d'un évidement (9) à proximité du haut-parleur (8), le couvercle de haut-parleur (6) et un élément de fixation (7) sont assemblés l'un à l'autre par des vis de fixation (15) et viennent en appui localement sur des côtés face à face du panneau de doublage (1), et plusieurs tétons (11, 12) sont prévus en saillie sur le couvercle de haut-parleur (6), lesquels sont disposés à distance les uns des autres et passent à travers des trous traversants (10) ménagés dans le panneau de doublage (1), l'élément de fixation (7) étant posé sur l'extrémité libre (14) de chaque téton (11), à savoir celle s'avançant en saillie sur le panneau de doublage (1), et étant immobilisé sur les tétons (11) au moyen de vis de fixation (15), **caractérisé en ce que**, par ailleurs, le haut-parleur (8) est posé sur l'élément de fixation (7) à forme annulaire et est maintenu en position sur les tétons (12) du couvercle de haut-parleur (6) au moyen de vis de fixation (16).

2. Dispositif de fixation selon la revendication 1, **caractérisé en ce que** sur le couvercle de haut-parleur (6) plat sont réalisés au moins deux tétons (11) pour l'assemblage avec l'élément de fixation (7) et au moins deux autres tétons (12) pour la fixation du haut-parleur.

3. Dispositif de fixation selon les revendications 1 et 2, **caractérisé en ce que** les deux tétons (11, 12) respectivement associés l'un à l'autre sont agencés en diagonale face à face sur le couvercle de haut-parleur (6).

4. Dispositif de fixation selon l'une quelconque des revendications 1 à 3, **caractérisé en ce que** les tétons (11, 12) formés sur le couvercle de haut-parleur (6) sont réalisés d'un seul tenant avec ce dernier.

5. Dispositif de fixation selon l'une quelconque des revendications précédentes, **caractérisé en ce que** le couvercle de haut-parleur (6) est formé par une pièce moulée par injection en matière plastique appropriée.

6. Dispositif de fixation selon la revendication 1, **caractérisé en ce que** les trous débouchants (10) sur le panneau de doublage (1) sont prévus en dehors et à proximité de l'évidement central (9).

7. Dispositif de fixation selon la revendication 1, **caractérisé en ce que** pour positionner l'élément de fixation (7) dans la bonne orientation, celui-ci comporte deux logements (17), conçus localement en forme de godet, qui enserrent par zones les extrémités libres (14) des tétons (11) associés du couvercle de haut-parleur (6).

8. Dispositif de fixation selon l'une quelconque des revendications précédentes, **caractérisé en ce que** l'élément de fixation (7) est posé sur au moins deux tétons (11), face à face, du couvercle de haut-parleur (6) et prend appui avec une ailette (18) périphérique du côté du bord sur la face intérieure du panneau de doublage (1).

9. Dispositif de fixation selon l'une quelconque des revendications précédentes, **caractérisé en ce que** le haut-parleur (8) est posé dans la zone de sa fixation sur la face frontale des extrémités libres des tétons (12) et est bloqué contre les tétons (12) et l'élément de fixation (7) au moyen de vis de fixation (16), un corps d'étanchéité (19) périphérique étant intercalé entre le haut-parleur (8) et l'élément de fixation (7).

10. Dispositif de fixation selon l'une quelconque des revendications précédentes, **caractérisé en ce que** les tétons (11, 12) moulés par injection sont réalisés sous forme de cylindres creux (20) qui sont fermés vers l'habitacle (3), les vis de fixation (15, 16) étant vissées depuis la face arrière à l'intérieur des cylindres creux (20).
